# EUROPÄISCHE PATENTSCHRIFT

(11) **EP 3 075 588 B1**
(45) Veröffentlichungstag und Bekanntmachung des Hinweises auf die Patenterteilung: **28.11.2018**
(21) Anmeldenummer: 16161678.4
(22) Anmeldetag: 22.03.2016
(51) Int. Cl.: B60K 7/00, B60K 17/04

(54) **FAHRANTRIEB FÜR EIN ELEKTRISCH ANGETRIEBENES FAHRZEUG**
DRIVE FOR AN ELECTRIC VEHICLE
ENTRAINEMENT POUR UN VEHICULE ENTRAINE ELECTRIQUEMENT

(30) Priorität: 31.03.2015 DE 102015104989
(43) Veröffentlichungstag der Anmeldung: 05.10.2016
(60) Teilanmeldung: 18187293.8
(73) Patentinhaber: Dipl.-Ingenieure Rainer & Oliver PULS GmbH, 76185 Karlsruhe (DE)
(72) Erfinder: Puls, Rainer, 76227 Karlsruhe (DE); Puls, Oliver, 76227 Karlsruhe (DE); Hilligardt, Andreas, 67117 Limburgerhof (DE); Kühn, Stephan, 85049 Ingolstadt (DE)
(74) Vertreter: Patent- und Rechtsanwälte Ullrich & Naumann

(56) Entgegenhaltungen:
- WO-A2-94/26551
- DE-A1-102010 007 066
- DE-A1-102010 020 576
- FR-A1- 2 680 733
- US-A1- 2006 225 930

## Beschreibung

Die Erfindung betrifft einen Fahrantrieb für ein elektrisch angetriebenes Fahrzeug, mit auf einer gemeinsamen Achslinie angeordneten linken und rechten Fahrzeugrädern und mit für das linke und das rechte Fahrzeugrad getrennten, in Fahrzeugrichtung hintereinander angeordneten Antriebseinheiten, wobei jede Antriebseinheit
- über eine mit mindestens einem Kardanelement versehene Gelenkwelle mit der Radnabe des jeweiligen Fahrzeugrades verbunden ist,
- auf einer gemeinsamen Achse zumindest einen Elektromotor und ein Abtriebselement zur Verbindung mit der Gelenkwelle umfasst.

Aus der DE 202 01 379 U1 und der WO 2012/139567 A2 sind elektrische Fahrantriebe mit zwei koaxial auf einer gemeinsamen Achse angeordneten zwei Motoren und Getrieben bekannt, wobei jedes Rad des Fahrzeugs über einen eigenen Motor mit Getriebe angetrieben ist. Eine solche Bauweise ermöglicht einen relativ kompakten elektrischen Fahrantrieb, bei dem die Zahl der Bauteile gering ist und Gewichts- und Wirkungsgradnachteile vermieden werden. Dass Elektromotoren in Fahrzeugrichtung auch hintereinander angeordnet werden können, ist unter anderem aus der gattungsbildenden FR 2 680 733 A1 bekannt. Aus der DE 10 2010 020 576 A1 ist ferner ein elektrisches Antriebssystem für die Fahrzeugvorderachse eines Hybridfahrzeugs bekannt, bei dem die elektrischen Maschinen zum Antrieb der Fahrzeugräder ebenfalls hintereinander angeordnet sind. Dies gilt jedoch nicht für die Getriebe. Ebenso ist aus der US 2006/0225930 A1 eine Fahrzeugachse eines Hybridfahrzeugs mit in Fahrzeuglängsrichtung hintereinander angeordneten elektrischen Motoren bekannt. Jedoch sind auch dort nicht die Getriebe in Fahrzeuglängsrichtung hintereinander angeordnet. In der DE 10 2010 007 066 ist ein lenkbarer Achsbaustein für ein aus mehreren Fahrzeugmodulen zusammensetzbares, gepanzertes Radfahrzeug offenbart. Um die Fahrzeugräder unabhängig voneinander antreiben zu können, umfasst der Antrieb zwei separate Elektromotoren, die innerhalb einer Wanne aus Panzerstahl hintereinander angeordnet sind. Auch Traktorfahrzeuge können elektrische Einzelradantriebe aufweisen, so beispielsweise das in der WO 94/26551 A1 dargestellte Traktorfahrzeug mit seinen im Bereich der Hinterräder hintereinander angeordneten Elektromotoren.

Obwohl die bekannten Fahrantriebe relativ kompakt bauen, ist die Bauweise nicht für alle Einsatzgebiete optimal. Für Zwecke des Automobilrennsports zum Beispiel ist nicht nur konzeptioneller Leichtbau bedeutsam, d. h. ein besseres Leistungsgewicht, sondern gefordert sind auch geringe Trägheiten im Hinblick auf das Problem des Rollens oder Gierens des Fahrzeugs. Wichtig bei einem Rennsportfahrzeug ist auch ein niedrig liegender Schwerpunkt. Ein niedriger Schwerpunkt ist dann erzielbar, wenn die besonders schweren Komponenten des Fahrzeugs soweit als möglich in dessen Zentrum, längs der Fahrzeugmittellinie sowie möglichst weit unten platziert werden.

Der Erfindung liegt die **Aufgabe** zugrunde, einen für elektrisch angetriebene Fahrzeuge und vor allem für im Motorsport einsetzbare Fahrzeuge geeigneten Fahrantrieb zu schaffen, wobei das besondere Augenmerk der optimierten Gewichtsverteilung innerhalb des Fahrzeugs gilt.

Zur Lösung dieser Aufgabe wird bei einem Fahrantrieb mit den eingangs genannten Merkmalen vorgeschlagen, dass jede Antriebseinheit (11,12) auf der gemeinsamen Achse (A1,A2) auch ein Getriebe (25) umfasst und dass die Achsen (A1, A2) der Antriebseinheiten (11, 12) unter einem Winkel (W2) zur Horizontalen geneigt angeordnet sind, wobei das gelenkwellenseitige Ende der Antriebseinheit (11, 12) jeweils das höher liegende Ende ist.

Durch die Anordnung der Antriebseinheiten hintereinander wird es möglich, jede der beiden Antriebseinheiten nahe der Fahrzeugmittellinie oder sogar auf der Fahrzeugmittellinie anzuordnen, so dass auch die Gewichtsverteilung innerhalb des Fahrzeugs stark entlang dessen Mittelachse konzentriert ist. Das Fahrverhalten, vor allem bei hohen Kurvenbeschleunigungen, wird dadurch verbessert und die Rollneigung des Fahrzeugs wird auf ein Minimum reduziert.

Durch die Anordnung der Antriebseinheiten hintereinander wird es möglich, jede der beiden Antriebseinheiten nahe der Fahrzeugmittellinie oder sogar auf der Fahrzeugmittellinie anzuordnen, so dass auch die Gewichtsverteilung innerhalb des Fahrzeugs stark entlang dessen Mittelachse konzentriert ist. Das Fahrverhalten, vor allem bei hohen Kurvenbeschleunigungen, wird dadurch verbessert und die Rollneigung des Fahrzeugs wird auf ein Minimum reduziert.

Die Anordnung der beiden Antriebseinheiten in Fahrzeuglängsrichtung hintereinander gelingt nur bei einem gewissen Vor- und Rückversatz der Antriebseinheiten relativ zu der Achslinie der beiden Fahrzeugräder. Dieser Versatz ist allerdings nicht groß und fällt, insbesondere bei Kombination mit geeigneten Gelenkwellen und Kardangelenken, nicht sehr ins Gewicht. Durch eine leichte Schrägstellung der beiden Antriebseinheiten, bei der diese unter einem horizontalen Winkel zur Fahrzeugquerrichtung angeordnet sind, lassen sich die Verluste in den Kardangelenken soweit reduzieren, dass sie keine nennenswerte praktische Bedeutung haben.

Mit einer weiteren Ausgestaltung des elektrischen Fahrantriebs wird vorgeschlagen, dass das der Verbindung mit der Gelenkwelle dienende Abtriebselement die Ausgangswelle des Getriebes ist.

Vorgeschlagen wird ferner, dass sich die beiden Antriebseinheiten in Fahrzeuglängsrichtung betrachtet zumindest zum Teil überdecken. Vorzugsweise beträgt, um das Gewicht der Antriebe nahe der Fahrzeugmittellinie zu konzentrieren, die Überdeckung mindestens zwei Drittel.

Ferner wird vorgeschlagen, dass die Achsen der Antriebseinheiten jeweils schräg bezüglich der gemeinsamen Achslinie der Fahrzeugräder angeordnet sind. Ferner können die Achsen der Antriebseinheiten jeweils schräg bezüglich der Fahrzeugquerrichtung angeordnet sein.

Gemäß einer weiteren Ausgestaltung des elektrischen Fahrantriebs sind die Achsen der Antriebseinheiten jeweils tiefer als die gemeinsame Achslinie der Fahrzeugräder angeordnet.

Gemäss Erfindung wird vorgeschlagen, dass die Achsen der Antriebseinheiten gegenüber der Horizontalen geneigt angeordnet sind, wobei das gelenkwellenseitige Ende der Antriebseinheit jeweils das höher liegende Ende ist. Eine solche Anordnung der Antriebseinheiten schafft die Voraussetzung dafür, die Antriebseinheiten sehr weit unten im Fahrzeug anzuordnen, d. h. in nur geringer Höhe über dem Fahruntergrund. Eine solche tiefe Anordnung ist bei Fahrzeugen für den Motorsport in der Regel unproblematisch, da diese Fahrzeuge ohnehin einen geringen vertikalen Federweg haben, und daher keine Gefahr der Kollision der Antriebseinheiten mit dem Fahruntergrund besteht.

Andererseits können die Antriebseinheiten auch in der Weise gegenüber der Horizontalen geneigt angeordnet sein, dass die beiden Fahrantriebe weit oben im Fahrzeug angeordnet sind. Dies kann dann vorteilhaft sein, wenn, etwa für Sonderfahrzeuge, eine erhöhte Bodenfreiheit gefordert ist.

Eine weitere Ausgestaltung des Fahrantriebs ist, für jede Antriebseinheit, durch eine außerhalb der Antriebseinheit angeordnete Bremsscheibe einer Scheibenbremse gekennzeichnet, wobei die Bremsscheibe drehfest an dem Abtriebselement befestigt ist, und daher die Bremsscheibe ebenfalls auf jener gemeinsamen Achse angeordnet ist, auf der auch der Elektromotor, das Getriebe und das Abtriebselement für die Verbindung mit der Gelenkwelle angeordnet sind. Durch diese Anordnung der Bremsscheibe lässt sich auch die Scheibenbremse weit innen, d. h. relativ nahe zu der Fahrzeugmittellinie, anordnen. Dies verbessert nochmals die Konzentration der relativ schwergewichtigen Fahrzeugkomponenten nahe der Fahrzeugmitte.

Der beschriebene elektrische Fahrantrieb lässt sich sowohl zum Antreiben gelenkter Räder einsetzen, welche in der Praxis zumeist die Vorderräder des Fahrzeugs sind, als auch bei ungelenkten Rädern, also üblicherweise den Hinterrädern des Fahrzeugs.

Weitere Vorteile und Einzelheiten werden nachfolgend unter Bezugnahme auf die Zeichnungen erläutert. Darin zeigen:
- Fig. 1: eine Draufsicht auf ein für den Rennsport konzipiertes, zweiachsiges und vierrädriges Fahrzeug, bei dem jedes der vier Räder über einen eigenen Elektromotor mit eigenem Getriebe angetrieben wird;
- Fig. 2: eine vereinfachte Ansicht auf eine Fahrzeugachse eines elektrisch angetriebenen Fahrzeugs mit Blickrichtung in Fahrtrichtung, einschließlich einer Antriebseinheit für das linke und einer separaten Antriebseinheit für das rechte Fahrzeugrad der Fahrzeugachse, und einer Scheibenbremse für jedes Rad, und
- Fig. 3: eine Draufsicht auf den Fahrantrieb nach Fig. 2.

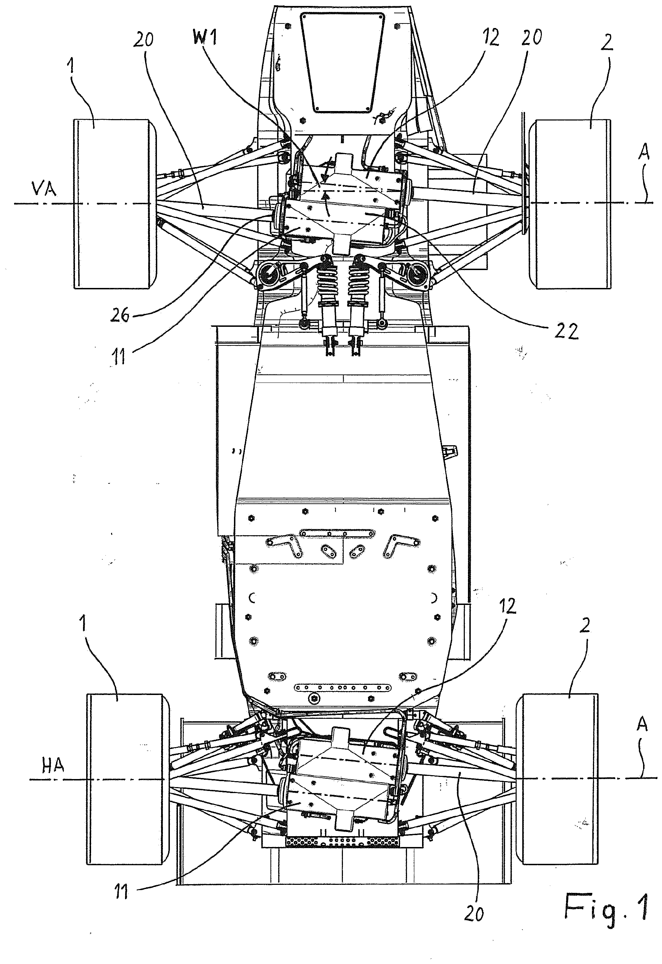

Fig. 1 zeigt ein speziell für den Rennsporteinsatz konzipiertes elektrisches Fahrzeug mit gelenkter Vorderachse VA, sowie nicht gelenkter Hinterachse HA. Das linke und das rechte Fahrzeugrad liegen jeweils auf derselben Achslinie A. Alle Fahrzeugräder 1, 2 beider Fahrzeugachsen VA, HA sind angetrieben. Der Antrieb für jedes Rad erfolgt elektrisch. Jedem einzelnen Rad 1, 2 ist ein eigener elektrischer Antrieb zugeordnet. Dessen Steuerung übernimmt vorzugsweise eine für alle Räder zentrale, also gemeinsame elektrische Steuereinheit mit Mikroprozessor.

Der Antrieb der in Fahrtrichtung linken Fahrzeugräder 1 erfolgt jeweils über eine erste elektrische Antriebseinheit 11. Diese ist über eine Gelenkwelle 20 mit der Radnabe des betreffenden linken Fahrzeugrads 1 verbunden. Der Antrieb der rechten Fahrzeugräder 2 erfolgt jeweils über eine zweite Antriebseinheit 12. Auch diese ist über eine Gelenkwelle 20 mit der Radnabe des betreffenden rechten Fahrzeugrads 2 verbunden.

Gemäß Fig. 1 sind die beiden Antriebseinheiten 11, 12 derselben Fahrzeugachse VA bzw. HA in Fahrzeuglängsrichtung hintereinander sowie zueinander etwas versetzt angeordnet. Durch diese Anordnung ist es möglich, beide Antriebseinheiten 11, 12 auf der Fahrzeugmittellinie oder zumindest sehr nahe an der Fahrzeugmittellinie anzuordnen, um so eine vor allem für den Rennsport optimale Gewichtsverteilung zentral im Fahrzeug zu erzielen, zumal gerade die Antriebseinheiten 11, 12 relativ schwere Bauteile sind.

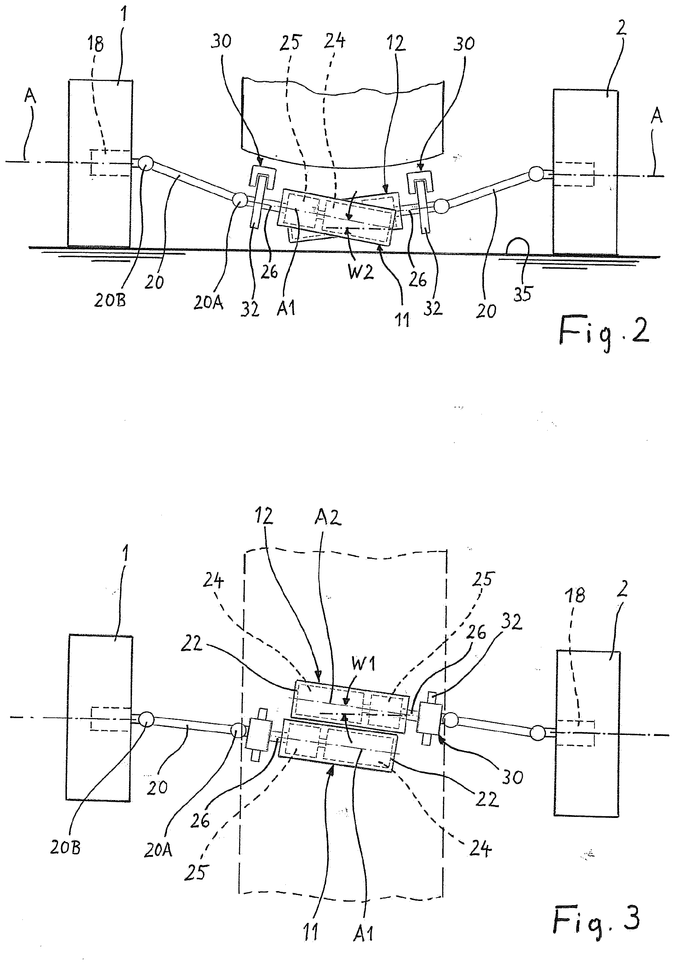

Nachfolgend werden anhand der Figuren 2 und 3 weitere Einzelheiten der Anordnung der für die beiden Fahrzeugräder 1, 2 getrennten Antriebseinheiten wiedergegeben, wobei Fig. 2 den elektrischen Fahrantrieb mit Blickrichtung in Fahrzeuglängsrichtung zeigt, hingegen Fig. 3 eine Draufsicht. Die Figuren 2 und 3 zeigen die Anordnung der Antriebseinheiten im Wesentlichen sowohl für die gelenkte Vorderachse VA, als auch für die nicht gelenkte Hinterachse HA.

Jede Antriebseinheit 11, 12 setzt sich zusammen aus einem Elektromotor 24, einem Encoder, einem Getriebe 25 und einem Abtriebselement 26, welches die Kraft der Antriebseinheit auf die Gelenkwelle 20 überträgt, eventuell über ein zusätzlich dazwischen angeordnetes Kardangelenk 20A oder ein vergleichbares Ausgleichsgelenk. Das Abtriebselement 26 kann z. B. die aus einem Gehäuse 22, welches den Elektromotor 24 und das Getriebe 25 umgibt, herausgeführte Ausgangswelle des Getriebes 25 sein.

Vorzugsweise ist das Gehäuse 22 ein gemeinsames Gehäuse, welches sowohl den Elektromotor mit dem Encoder als auch das Getriebe aufnimmt und eine Öffnung für das Hindurchführen des zu der Gelenkwelle führenden Abtriebselements 26 des Getriebes aufweist, sowie ggf. weitere Öffnungen für Elektrokabel oder Kühlmittelanschlüsse für die Kühlung des Elektromotors.

Das Getriebe 25 kann für eine besonders kompakte Bauweise mit hohem Leistungspotential ein Planetenradgetriebe sein. In diesem Fall sitzt das Abtriebselement 26 entweder auf derselben Zentralwelle wie der Planetenradträger, oder das Sonnenrad des Planetengetriebes, oder das Abtriebselement 26 ist ein aus dem Gehäuse 22 herausgeführter Wellenabschnitt des Planetenradträgers oder des Sonnenrades des Planetenradgetriebes.

Die beiden Gehäuse 22 sind in geeigneter Weise am Fahrzeugchassis befestigt. Diese Befestigung kann starr sein, oder durch elastische Dämpfungselemente gedämpft. Die beiden Gehäuse 22 können miteinander verbunden, oder jeweils für sich an dem Chassis befestigt sein.

Bei jeder Antriebseinheit 11, 12 befinden sich der Elektromotor 24, der Encoder, das Getriebe 25 und das Abtriebselement 26 koaxial auf einer gemeinsamen Achse. Auch die Öffnung im Gehäuse 22 für das Hindurchführen des Abtriebselements 26 ist auf dieser Achse angeordnet. Diese gemeinsame Achse ist für die linke Antriebseinheit 11 die Achse A1, und für die rechte Antriebseinheit 12 die Achse A2. Die Achsen A1, A2 der Antriebseinheiten 11, 12 sind jeweils schräg bezüglich jener gemeinsamen Achslinie A angeordnet, auf der sich die beiden Fahrzeugräder 1, 2 bei Geradeausfahrt drehen.

Das Abtriebselement 26 der jeweiligen Antriebseinheit ist über ein inneres Kardangelenk 20A mit der Gelenkwelle 20, und diese über ein äußeres Kardangelenk 20B mit der Radnabe 18 des jeweiligen Fahrzeugrads 1 bzw. 2 verbunden. Anstelle der Kardangelenke können auch andere, vergleichbare Ausgleichsgelenke verwendet werden.

Ebenfalls auf der gemeinsamen Achse A1, A2 der jeweiligen Antriebseinheit 11, 12 ist eine Bremsscheibe 32 einer Scheibenbremse 30 angeordnet. Die Bremsscheibe 32 ist drehfest an dem Abtriebselement 26 befestigt und sie befindet sich außerhalb des Gehäuses 22 der Antriebseinheit 11 bzw. 12. Durch diese Bauweise lässt sich auch die Scheibenbremse 30 relativ nahe zu der Fahrzeugmittellinie anordnen, was zu einer zusätzlichen Konzentration der ein relativ hohes Gewicht aufweisenden Komponenten nahe der Fahrzeugmittellinie führt.

Gemäß Fig. 1 und Fig. 3 sind die zwei Antriebseinheiten 11, 12 derselben Fahrzeugachse VA bzw. HA in Fahrtrichtung hintereinander angeordnet. Ihre Achsen A1, A2 verlaufen nicht genau in Fahrzeugquerrichtung, sondern unter einem horizontalen Winkel W1 zur Fahrzeugquerrichtung. Dieser Winkel W1 beträgt zwischen 2,5° und 15°, vorzugsweise 2,5° bis 10°. Nur bei Betrachtung in Draufsicht, wie in Fig. 1 und Fig. 3 wiedergegeben, erstrecken sich die Achsen A1, A2 (scheinbar) parallel zueinander.

Zusätzlich sind, wie ebenfalls Fig. 1 und Fig. 3 erkennen lassen, die beiden Antriebseinheiten 11, 12, von oben betrachtet, in Richtung ihrer Achsen A1, A2 versetzt zueinander angeordnet.

Gemäß Fig. 2, also bei Betrachtung in Fahrzeuglängsrichtung, überdecken sich die beiden Antriebseinheiten 11, 12 zu einem großen Teil. Vorzugsweise beträgt diese Überdeckung der Antriebseinheiten 11, 12 mindestens zwei Drittel, um so das Gewicht der Antriebseinheiten nahe der Fahrzeugmittellinie zu konzentrieren.

Gemäß Fig. 2 sind die Achsen A1, A2 für einen tiefen Schwerpunkt, wie er vor allem für den Einsatz im Automobilrennsport wichtig ist, jeweils tiefer als die gemeinsame Achslinie A der Fahrzeugräder 1, 2 angeordnet.

Ferner lässt Fig. 2 erkennen, dass die Achsen A1, A2 der Antriebseinheiten 11, 12 derart gegenüber einer Horizontalebene, hier repräsentiert durch den Fahruntergrund 35, unter zueinander gegenläufigen Winkeln W2 geneigt angeordnet sind, dass jeweils das gelenkwellenseitige Ende der Antriebseinheit 11, 12 das höher liegende Ende ist. Der Neigungswinkel W2 gegenüber der Horizontalebene 35 beträgt jeweils zwischen 2,5° und 20°, vorzugsweise 5° bis 10°.

Durch die Verwendung von Planetengetrieben, Koaxialgetrieben und einer Wickelkopfkühlung werden für die Antriebseinheiten 11, 12 überaus kompakte Baueinheiten erreicht, wodurch die Neigung in der Horizontalebene reduziert wird. Auch werden die Verluste in den Kardangelenken reduziert.

### Bezugszeichenliste

- 1: linkes Fahrzeugrad
- 2: rechtes Fahrzeugrad
- 11: Antriebseinheit für das linke Fahrzeugrad
- 12: Antriebseinheit für das rechte Fahrzeugrad
- 18: Radnabe
- 20: Gelenkwelle
- 20A: inneres Kardanelement
- 20B: äußeres Kardanelement
- 22: Gehäuse
- 24: Elektromotor
- 25: Getriebe
- 26: Abtriebselement
- 30: Scheibenbremse
- 32: Bremsscheibe
- 35: Fahruntergrund, Horizontalebene

- A: gemeinsame Achslinie
- A1: Achse der Antriebseinheit
- A2: Achse der Antriebseinheit
- HA: Hinterachse
- VA: Vorderachse
- W1: Winkel zur Fahrzeugquerrichtung
- W2: Winkel zur Horizontalen

## Patentansprüche

1. Fahrantrieb für ein elektrisch angetriebenes Fahrzeug, mit auf einer gemeinsamen Achslinie (A) angeordneten linken und rechten Fahrzeugrädern (1, 2) und mit für das linke und das rechte Fahrzeugrad getrennten Antriebseinheiten (11, 12), wobei jede Antriebseinheit (11, 12)
- über eine mit mindestens einem Kardanelement (20A, 20B) versehene Gelenkwelle (20) mit der Radnabe (18) des jeweiligen Fahrzeugrads (1, 2) verbunden ist,
- auf einer gemeinsamen Achse (A1, A2) zumindest einen Elektromotor (24) und ein Abtriebselement (26) für die Verbindung mit der Gelenkwelle (20) umfasst,
**dadurch gekennzeichnet, dass** jede Antriebseinheit (11, 12) auf der gemeinsamen Achse (A1, A2) auch ein Getriebe (25) umfasst und dass
die Achsen (A1, A2) der Antriebseinheiten (11, 12)
unter einem Winkel (W2) zur Horizontalen geneigt angeordnet sind, wobei das gelenkwellenseitige Ende der Antriebseinheit (11, 12) jeweils das höher liegende Ende ist.

2. Fahrantrieb nach Anspruch 1, **dadurch gekennzeichnet, dass** das Abtriebselement (26) die Ausgangswelle des Getriebes (25) ist.

3. Fahrantrieb nach Anspruch 1 oder 2, **dadurch gekennzeichnet, dass** die Achsen (A1, A2) unter einem horizontalen Winkel (W1) zur Fahrzeugquerrichtung angeordnet sind.

4. Fahrantrieb nach Anspruch 1, 2 oder 3, **dadurch gekennzeichnet, dass** sich die beiden Antriebseinheiten (11, 12), in Fahrzeuglängsrichtung betrachtet, zumindest zum Teil überdecken.

5. Fahrantrieb nach Anspruch 4, **dadurch gekennzeichnet, dass** die Überdeckung mindestens zwei Drittel beträgt.

6. Fahrantrieb nach einem der vorangehenden Ansprüche, **dadurch gekennzeichnet, dass** die Achsen (A1, A2) der Antriebseinheiten (11, 12) jeweils schräg bezüglich der gemeinsamen Achslinie (A) der Fahrzeugräder angeordnet sind.

7. Fahrantrieb nach einem der vorangehenden Ansprüche, **dadurch gekennzeichnet, dass** die Achsen (A1, A2) der Antriebseinheiten (11, 12) jeweils schräg bezüglich der Fahrzeugquerrichtung angeordnet sind.

8. Fahrantrieb nach einem der vorangehenden Ansprüche, **dadurch gekennzeichnet, dass** die Achsen (A1, A2) der Antriebseinheiten (11, 12) jeweils tiefer als die gemeinsame Achslinie (A) der Fahrzeugräder angeordnet sind.

9. Fahrantrieb nach einem der vorangehenden Ansprüche, **gekennzeichnet durch** eine außerhalb der Antriebseinheit (11, 12) angeordnete Bremsschreibe (32) einer Scheibenbremse (30), wobei die Bremsschreibe (32) drehfest an dem Abtriebselement (26) befestigt ist.

## Claims

1. Drive for an electrically driven vehicle, having left and right vehicle wheels (1, 2) which are arranged on a common axle line (A) and having drive units (11, 12) which are separated for the left and right vehicle wheel, wherein each drive unit (11, 12)
- is connected by means of a cardan shaft (20) which is provided with at least one cardan element (20A, 20B) to the wheel hub (18) of the respective vehicle wheel (1, 2),
- on a common axle (A1, A2) comprises at least one electric motor (24) and an output element (26) for the connection to the cardan shaft (20),
**characterised in that** each drive unit (11, 12) also comprises a gear mechanism (25) on the common axle (A1, A2), and **in that**
the axles (A1, A2) of the drive units (11, 12) are arranged so as to be inclined at an angle (W2) with respect to the horizontal, wherein the cardan-shaft-side end of the drive unit (11, 12) is in each case the higher end.

2. Drive according to claim 1, **characterised in that** the output element (26) is the output shaft of the gear mechanism (25) .

3. Drive according to claim 1 or 2, **characterised in that** the axles (A1, A2) are arranged at a horizontal angle (W1) with respect to the transverse vehicle direction.

4. Drive according to claim 1, 2 or 3, **characterised in that** the two drive units (11, 12) at least partially overlap each other when viewed in the longitudinal direction of the vehicle.

5. Drive according to claim 4, **characterised in that** the overlapping amounts to at least two thirds.

6. Drive according to any one of the preceding claims, **characterised in that** the axles (A1, A2) of the drive units (11, 12) are each arranged in an oblique manner with respect to the common axle line (A) of the vehicle wheels.

7. Drive according to any one of the preceding claims, **characterised in that** the axles (A1, A2) of the drive units (11, 12) are each arranged in an oblique manner with respect to the transverse vehicle direction.

8. Drive according to any one of the preceding claims, **characterised in that** the axles (A1, A2) of the drive units (11, 12) are each arranged lower than the common axle line (A) of the vehicle wheels.

9. Drive according to any one of the preceding claims, **characterised by** a brake disc (32) of a disc brake (30) arranged outside the drive unit (11, 12), wherein the brake disc (32) is secured in a rotationally secure manner to the output element (26).

## Revendications

1. Dispositif d'entraînement pour un véhicule entraîné électriquement, avec des roues (1, 2) gauche et droite disposées sur une ligne d'essieu (A) commune et avec des unités d'entraînement (11, 12) distinctes pour les roues gauche et droite du véhicule, chaque unité d'entraînement (11, 12)
- étant relié, par l'intermédiaire d'un arbre à cardan (20) muni d'un élément de cardan (20A, 20B), avec le moyeu (18) de la roue (1, 2) correspondante,
- comprenant, sur un axe commun (A1, A2), au moins un moteur électrique (24) et un élément de sortie (26) pour la liaison avec l'arbre à cardan (20),
**caractérisé en ce que** chaque unité d'entraînement (11, 12) comprend, sur l'axe commun (A1, A2), également une transmission (25) et **en ce que** les axes (A1, A2) des unités d'entraînement (11, 12) sont disposés de manière inclinée avec un angle (W2) par rapport à l'horizontale, l'extrémité côté arbre à cardan de l'unité d'entraînement (11, 12) étant l'extrémité la plus élevée.

2. Dispositif d'entraînement selon la revendication 1, **caractérisé en ce que** l'élément de sortie (26) est l'arbre de sortie de la transmission (25).

3. Dispositif d'entraînement selon la revendication 1 ou 2, **caractérisé en ce que** les axes (A1, A2) sont disposés avec un angle horizontal (W1) par rapport à la direction transversale du véhicule.

4. Dispositif d'entraînement selon la revendication 1, 2 ou 3, **caractérisé en ce que** les deux unités d'entraînement (11, 12), vues dans la direction longitudinale du véhicule, se superposent au moins partiellement.

5. Dispositif d'entraînement selon la revendication 4, **caractérisé en ce que** la superposition est d'au moins deux tiers.

6. Dispositif d'entraînement selon l'une des revendications précédentes, **caractérisé en ce que** les axes (A1, A2) des unités d'entraînement (11, 12) sont disposées de manière oblique par rapport à la ligne d'essieu (A) commune des roues du véhicule.

7. Dispositif d'entraînement selon l'une des revendications précédentes, **caractérisé en ce que** les axes (A1, A2) des unités d'entraînement (11, 12) sont disposées de manière oblique par rapport à la direction transversale du véhicule.

8. Dispositif d'entraînement selon l'une des revendications précédentes, **caractérisé en ce que** les axes (A1, A2) des unités d'entraînement (11, 12) sont disposées plus bas que la ligne d'essieu (A) commune des roues du véhicule.

9. Dispositif d'entraînement selon l'une des revendications précédentes, **caractérisé par** un disque de frein (32), disposé à l'extérieur de l'unité d'entraînement (11, 12), d'un frein à disque (30), le disque de frein (32) étant fixé de manière sécurisée contre une rotation sur l'élément de sortie (26).
